# EUROPEAN PATENT APPLICATION

(11) **EP 1 538 172 A1**
(43) Date of publication of application: **08.06.2005**
(21) Application number: 04257214.9
(22) Date of filing: 20.11.2004
(51) Int. Cl.: C08G 18/80, C08G 18/62, C09D 175/04

(54) **One-component flexible etch resistant clearcoat**

(30) Priority: 04.12.2003 US 526803
(71) Applicant: Rohm and Haas Company, Philadelphia, Pennsylvania 19106-2399 (US)
(72) Inventor: Drescher, James Conrad, Portage, Indiana 46368 (US); Muller, Lisa Marie, Palos Heights, Illinois 60463 (US); Tokash, Robert D., Portage, Indiana 46368 (US); Neubeck, Hans Bernhart, Cedar Lake, Indiana 46303 (US)
(74) Representative: Buckley, Guy Julian

(57) **Abstract**

The present invention provides one-component compositions which comprise one or more hydroxyl functional acrylic resin having a glass transition temperature (Tg) of from -100°C to -10°C and one or more dialkyl dicarboxylic acid ester endcapped polyisocyanate crosslinker, such as the isocyanurate of isophorone diisocyanate (IPDI), and flexible, environmental etch resistant coatings made therefrom. The acrylic resins comprise the polymerized reaction product of one or more flexibility conferring monomers, e.g. butyl acrylate, and provide the coating with its flexibility. The one or more dialkyl dicarboxylic acid ester endcapped polyisocyanate and the hydroxyl groups in the one or more acrylic resins react to cure at lower temperatures than current one-component blocked isocyanate coatings. Alternatively, one-component coating compositions consists essentially of one or more rigid hydroxyl functional acrylic resin and one or more dialkyl dicarboxylic acid ester endcapped aliphatic polyisocyanates. The present invention provides coated, environmental etch resistant exterior automotive plastic parts, such as bumpers, fascia, body trim and body molding.

## Description

The present invention relates to one component coating compositions for making flexible, etch resistant clearcoats, topcoats and basecoats, and to coated substrates made from such compositions. More particularly, the present invention relates to one-component solvent borne, flexible acrylic coatings that provide environmental environmental etch resistant coatings on exterior automotive substrates.

### BACKGROUND

Environmental etch resistance provides a key component of weatherability in clearcoats, i.e. transparent or translucent topcoats, and in colored topcoats. Previously, environmental etch resistance has been achieved by making the coating harder, less porous, and therefore less flexible. For example, the use of blocked isophorone diisocyanate (IPDI) or blocked IPDI-containing crosslinkers provides environmental etch resistance in the resulting IPDI crosslinked coatings which are extremely rigid and inflexible.

Carbamate containing crosslinkers have been proposed for use in clearcoats and topcoats to improve environmental etch resistance at a low cost. However, the performance of these coatings is inferior both in environmental etch resistance and in final on-part appearance.

Improved environmental etch resistance in clearcoats and topcoats has been obtained in two-component coating compositions, wherein a resin or a polymer formulation comprised one component, and a curing agent formulation for the polymer or resin comprised another component. In combining the separate reactive components, two-component coatings can be cured more quickly than one-component coatings which must be storage stable and yet curable on demand.
However, two-component coating equipment requires the controlled mixing and supply of two components, lest the coating quality will vary. Further, two-component coating equipment includes mixing and supply means for two components, rather than one, and this additional equipment must be cleaned before applying a new or different coating to a substrate. Accordingly, at present, the majority of the automotive coatings applicators in North America are equipped to apply one-component coating formulations.

U.S. patent no. 5,821,315, to Moriya et al. discloses paint compositions for use making acid and scratch resistant clearcoats and color coats, wherein the compositions comprise 40 to 80 weight % of a vinyl copolymer reaction product of a lactone modified acrylic monomer and another monomer, 10 to 40 weight % of a polyisocyanate compound that has been blocked with a mixture of malonic acid and acetoacetic acid as crosslinker, and 5 to 30 weight % of an alkyl etherified amino resin. The Moriya et al. clearcoats or color topcoats lack adequate solvent resistance and fail to provide the environmental etch resistance necessary for automotive use. In addition, inflexible coatings on flexible substrates will invariably crack, and can damage the substrate.

It would be desirable to provide a one-component coating composition that enables coating applicators to use the widely installed one-component application equipment, and that provides coatings that are sufficiently hard and environmental etch resistant for use on automotive exterior substrates, such as metal and glass, and which are also sufficiently flexible for use on automotive exterior plastics substrates, such as bumpers.

### STATEMENT OF THE INVENTION

The present invention provides one-component coating compositions comprising one or more hydroxyl functional acrylic resin chosen from flexible acrylic resin having a glass transition temperature (Tg) of from -100°C to -10°C and rigid acrylic resin having a glass transition temperature (Tg) of from 20°C to 70°C, and one or more di(alkoxy)alkyl dicarboxylic acid ester endcapped polyisocyanate crosslinker, such as the isocyanurate of isophorone diisocyanate (IPDI), wherein when the said one or more hydroxyl functional acrylic resin is rigid acrylic resin, the said one or more di(alkoxy)alkyl dicarboxylic acid ester endcapped polyisocyanate crosslinker comprises aliphatic polyisocyanate, such as the isocyanurate of hexamethylene diisocyanate (HDI), which crosslinker provides the coating made therefrom with its flexibility. Flexible, environmental etch resistant coatings and clearcoats may be made from the compositions.

The one or more hydroxyl functional acrylic resin having a Tg of -100°C to -10°C provides coatings made therefrom with flexibility and may preferably be combined with one or more di(alkoxy)alkyl dicarboxylic acid ester endcapped alicyclic or aromatic polyisocyanate crosslinkers which confer rigidity to a coating.

The flexible or rigid acrylic resins contain pendant reactive hydroxyl groups and are the copolymerization product of hydroxyl group containing monomers chosen from one or more of 4-hydroxybutyl (meth)acrylate (butanediol mono(meth)acrylate), propylene glycol (meth)acrylate, pentanediol (meth)acrylate, hexylene glycol (meth)acrylate, diethylene glycol (meth)acrylate, triethylene glycol (meth)acrylate, dipropylene glycol (meth)acrylate, N-propanol (meth)acrylamide, N-butanol (meth)acrylamide, and polyether (meth)acrylate. Preferred di(alkoxy)alkyl dicarboxylic acid ester endcapping groups for polyisocyanate include dialkyl malonates, such as diethyl malonate (DEM). The present invention also provides coated automotive plastic, glass and metal substrates having weatherable, environmental etch resistant and flexible coatings.

### DETAILED DESCRIPTION

The one-component coating compositions of the present invention unexpectedly provide environmental etch resistant coatings that are both hard enough for metal and glass substrates and flexible enough for automotive plastic substrates. "One-component" coating compositions refer to compositions which can be made in a single batch and stored in a single container, without any need to keep resin separate from crosslinker. The one or more di(alkoxy)alkyl dicarboxylic acid ester endcapped polyisocyanate and the hydroxyl groups in the one or more acrylic resins can readily be cured at lower temperatures than currently available one-component blocked isocyanate coatings.

All ranges cited herein are inclusive and combinable. For example, if an ingredient may be present in amounts of 4 wt.% or more, or 10 wt.% or more, and may be present in amounts up to 25 wt.%, then that ingredient may be present in amounts of 4 to 10 wt.%, 4 to 25 wt.% or 10 to 25 wt.%.

As used herein, the term "acrylic" includes both acrylic and methacrylic, and combinations and mixtures thereof, the term "acrylate" includes both acrylate and methacrylate, and combinations and mixtures thereof, and the term "acrylamide" includes both acrylamide and methacrylamide, and combinations and mixtures thereof.

As used herein, the term "di(alkoxy)alkyl" refers to dialkyl, dialkoxyalkyl and mixtures of alkoxyalkyl and alkyl.

As used herein, the "glass transition temperature" or Tg of any polymer may be calculated as described by Fox in *Bull. Amer. Physics. Soc.,* 1, 3, page 123 (1956). The Tg can also be measured experimentally using differential scanning calorimetry (rate of heating 20°C. per minute, Tg taken at the midpoint of the inflection). Unless otherwise indicated, the stated Tg as used herein refers to the calculated Tg.

As used herein, the softening point of any polymer or resin may be experimentally measured using differential scanning calorimetry (DSC), measured as the middle of the peak corresponding to softening in the DSC curve.

As used herein, the phrase "hydroxyl number" refers to the number of milligrams (mg) of KOH equivalent to the hydroxyl groups present in each gram (g) of polymer and has the units (mg KOH/g polymer).

As used herein, the term "Mw" refers to weight-average molecular weight, as determined by gel permeation chromatography (GPC).

As used herein, unless otherwise indicated, the phrase "per hundred parts resin" or "phr" means the amount, by weight, of an ingredient per hundred parts, by weight, of the total amount of resin, reactant monomer, and polymer contained in a composition, including cross-linking resins of any kinds. The phrase "phr" may be used interchangeably with the phrase "based on total resin solids."

As used herein, the phrase "TPO" refers to thermoplastic polyolefin, a substrate comprising at least about 50 wt.% of a resin which may be a propylene homopolymer or a copolymer in which at least 60 wt.% of the monomer content is propylene.

As used herein, the phrase "plastics" refers to TPO, acrylonitrile-butadiene-co- styrene polymer (ABS), thermoplastic polyurethane (TPU), polyethylene terephthalate (PET), polyethylene (PE), polypropylene (PP), PE/EPDM (ethylene-propylene-diene rubber), PP/EPDM, nylon, rapid or reactive injection molded (RIM) urethanes, sheet molded composites (SMC), polycarbonate (PC), polyacetal, or mixtures thereof, such as ABS/PC, and combinations thereof.

As used herein, the phrase "polyisocyanate" means a compound having 3 or more isocyanate functional groups.

As used herein, the term "polymer" includes polymers, copolymers and terpolymers, block copolymers and terpolymers, and mixtures thereof.

As used herein, the term "resin" includes any reactive polymers, copolymers and terpolymers, block copolymers and terpolymers, monomers, oligomers and mixtures thereof.

As used herein, the phrase "total solids" refers to the percentage of organic and inorganic solids, by weight, remaining after removal of volatile components, expressed as a portion of the total weight of a composition.

As used herein, the phrase "wt%" stands for weight percent.

In one embodiment, the coating compositions comprise a mixture of:
from 5 to 50 wt.%, based on total resin solids, of one or more hydroxyl functional acrylic resin having a glass transition temperature (Tg) of from -100°C to -10°C,
from 5 to 35 wt.%, based on total resin solids, of one or more di(alkoxy)alkyl dicarboxylic acid ester endcapped polyisocyanate crosslinker resin, and
from 0 to 15 wt.%, based on total resin solids of one or more additional crosslinker.

Desirably, in any and all embodiments, the acrylic resin hydroxyl groups and the polyisocyanate crosslinker ester groups are mixed in a stoichiometric ratio of from 0.66:1.0 to 1.5:1.0, preferably from 0.8:1.0 to 1.3:1.0. For purposes of calculating stoichiometry, the equivalent weight of the di(alkoxy)alkyl dicarboxylate endcapped polyisocyanate is determined on the basis of the theoretical amount of isocyanate contained in the polyisocyanate.

In another embodiment, the hydroxyl functional acrylic resin comprises the polymeric reaction product of from 30 to 85 wt.%, for example from 40 to 85 wt.%, based on the weight of all acrylic monomer reactants, of a flexibility conferring monomer and from 70 to 10 wt.%, for example from 50 to 15 wt.%, based on the weight of all acrylic monomer reactants, of a pendant hydroxyl group conferring monomer. The hydroxyl functional acrylic resin may also comprise the polymeric reaction product of three or more monomers including from 40 to 60 wt.%, based on the weight of all acrylic monomer reactants, of a flexibility conferring monomer, from 60 to 10 wt.%, based on the weight of all acrylic monomer reactants, of a pendant hydroxyl group conferring monomer, and from 0 to 20 wt.%, based on the weight of all acrylic monomers, of an additional monomer.

In yet another embodiment, the one or more polyisocyanate crosslinker consists essentially of one or more di(alkoxy)alkyl dicarboxylic acid ester endcapped polyisocyanate crosslinker. Even the use of 5 wt.% or less of polyisocyanates endcapped with acetoacetate and its esters, based on the total weight of polyisocyanates, may cause yellowing of automotive clearcoats and may lead to inferior solvent resistance in coatings and inferior coating hardness.

In yet still another embodiment, the one or more polyisocyanate crosslinker comprises one or more di(alkoxy)alkyl dicarboxylic acid ester endcapped oligomer, trimer, biuret or isocyanurate of an aromatic isocyanate or an alicyclic isocyanate, chosen from IPDI, methylenebis-4, 4'- isocyanatocyclohexane, 1,4-cyclohexane diisocyanate, tetramethyl xylylene diisocyanate (TMXDI), metaxylylene diisocyanate, p-phenylene diisocyanate, triphenylmethane 4,4',4"- triisocyanate, toluene diisocyanate (TDI), diphenylmethane 4,4'-diisocyanateand mixtures thereof, wherein an "oligomer" contains from 4 to 8 reactive endcapped isocyanate groups. Such crosslinkers confer rigidity to coatings made therefrom.

In an alternative embodiment, one-component compositions for making flexible, environmental etch resistant coatings consist essentially of one or more rigid hydroxyl functional acrylic resin having a glass transition temperature (Tg) of from 20°C to 70°C and one or more di(alkoxy)alkyl dicarboxylic acid ester endcapped aliphatic polyisocyanate crosslinker, such as the isocyanurate of hexamethylene diisocyanate (HDI), wherein the polyisocyanate crosslinker provides the coating with its flexibility. In this embodiment, the coating composition, the use of melamine or aminoplast crosslinkers is desirably avoided because even the use of 5 wt.% of such crosslinkers will hinder the environmental etch resistance of coatings made from the composition. Further, in this embodiment, the hydroxyl functional acrylic resin comprises the polymeric reaction product of from 10 to 50 wt.%, for example from 15 to 30 wt.%, based on the weight of all acrylic monomers forming the resin, of a flexibility conferring monomer, from 15 to 60 wt.%, for example from 25 to 50 wt.%, based on the weight of all acrylic monomers forming the resin, of a pendant hydroxyl group conferring monomer, and from 0 to 65 wt.%, for example, from 10 to 50 wt.%, based on the weight of all acrylic monomers forming the resin, of an additional monomer.

The one or more rigid hydroxyl functional acrylic resin may comprise the polymeric reaction product of monomers comprising one or more aliphatic urethane dimethacrylate as a flexibility conferring monomer, or in admixture with flexibility conferring monomers, as defined below, and the one or more di(alkoxy)alkyl dicarboxylic acid ester endcapped oligomer, trimer, biuret or isocyanurate of one or more aliphatic isocyanate, such as HDI, wherein an "oligomer" contains from 4 to 8 reactive endcapped isocyanate groups.

In a preferred embodiment, any coating compositions contain less than 5 phr of colorants or pigments and are used as clearcoats or translucent coatings. However, the coating composition may comprise colorcoats such as topcoats, basecoats and even primer coats where a flexible, weatherable coating is desired.

The present invention also provides coated, environmental etch resistant substrates chosen from automotive plastics, especially exterior automotive plastic parts, such as bumpers, fascia, body trim and body molding; interior automotive parts, such as dashboards and door panels, and plastics for non-automotive exterior applications, including outdoor furniture, toys and sporting goods; glass, steel, iron, aluminum, zinc, other metals and alloys, such as chrome steel and titanium and molybdenum alloys, for example, metal bodies, sheets of iron, steel, aluminum, zinc, and surface treated sheets where these metals sheets have been subjected to iron phosphate treatment, for example, zinc phosphate treatment or chromate treatment.

The flexible acrylic resins of the present invention may have an hydroxyl or OH number of 80 or more, for example, 100 or more, or 150 or more, or 175 or more, and may have OH numbers as high as 350, or as high as 275, or as high as 200. Because the acrylic resins impart flexibility to the coatings made therefrom, a formulator may to select acrylic resins having an OH number of higher than 200. Further, a formulator may select aromatic and alicyclic polyisocyanates for use as crosslinkers without sacrificing flexibility in the name of hardness or rigidity. Preferably, flexible acrylic resins have an OH number of from 100 to 150.

Flexible acrylic resins may have a Tg of less than -10°C and at least -100°C, however, preferred acrylic resins have a Tg of less than -20°C, more preferably less than -30°C for added flexibility and chip resistance in coatings. Further, flexible acrylic resins have a number average molecular weight (Mn) of 2,000 or more, such as 2,500 or more or 2,800 or more, and this can range up to 6,000, or up to 4,500 or up to 3,500. Such flexible acrylic resins may have a hydroxyl functionality of from 4.5 to 10, for example, from 5 to 8.5, or from 5.5 to 7.6. Monomers conferring flexibility to flexible acrylic resins may be used in the amount of 30 wt.% or more, based on the weight of all reactants forming the resin, or 40 wt.% or more, and should be used in the amount of 85 wt.% or less, or 70 wt.% or less, or 60 wt.% or less.

Rigid hydroxyl functional acrylic resins may have a Tg of less than 70°C and at least 20°C, however, preferred rigid hydroxyl functional acrylic resins have a Tg of more than 30°C and less than 60°C for added rigidity and environmental etch resistance in coatings. The rigid hydroxyl functional acrylic resins may have a hydroxyl functionality of from 3 to 10, for example from 3 to 7.5, and may have a hydroxyl number of from 50 to 150, preferably from 60 to 110. Hydroxyl numbers in rigid hydroxyl functional acrylic resins generally range lower than hydroxyl numbers in flexible hydroxyl functional acrylic resins to avoid inflexibility in coatings made therefrom. Further, rigid hydroxyl functional acrylic resins have a number average molecular weight (Mn) of from 1,500 to 6,000, for example from 2,000 to 4,000. Monomers conferring flexibility may be used in rigid acrylic resin in the amount of from 10 wt.% or more, based on the weight of all reactants forming the resin, or 15 wt.% or more, and should be used in the amount of 50 wt.% or less, or 30 wt.% or less.

Monomers conferring flexibility in either the flexible or rigid hydroxyl functional acrylic resin include, but are not limited to, ethyl (meth)acrylate, methyl acrylate, butyl (meth)acrylate, 2-ethylhexyl acrylate, lauryl (meth)acrylate, polyurethane di(meth)acrylates, such as the di(meth)acrylate of a urethane made from the reaction of HDI and a diol, or a glycol, or a polyglycols, or a polyether diol, polyether di(meth)acrylates, polyester di(meth)acrylates, such as di(meth)acrylates of oligocaprolactone (containing from 2 to 10 caprolactone groups), and mixtures and combinations thereof.

Monomers conferring pendant hydroxyl groups in the flexible or rigid hydroxyl functional acrylic resin include, but are not limited to, 4-hydroxybutyl (meth)acrylate or butanediol monoacrylate, propylene glycol methacrylate, pentanediol (meth)acrylate, hexylene glycol (meth)acrylate, diethylene glycol (meth) acrylate, dipropylene glycol (meth) acrylate, N-propanol (meth)acrylamide, N-butanol (meth)acrylamide, N-hexanol (meth)acrylamide, and polyether (meth)acrylates of the formula: 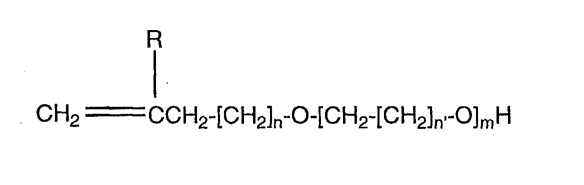 wherein R is H or CH₃, n and n' are each, independently, an integer of from 1 to 4, and m is an integer of from 2 to 8. Mixtures and combinations of monomers conferring pendant hydroxyl groups may also be used. Monomeric reactants conferring pendant hydroxyl groups to acrylic resins may be used in the amount of 10 wt.% or more, based on the weight of all reactants, or 15 wt.% or more, and should be used in the amount of 70 wt.% or less, or 60 wt.% or less.

Additional monomers, if desired, may be chosen from styrene and α-methyl styrene, and 1 to 12 carbon alkyl esters of (meth)acrylic acids, such as methyl methacrylate, and cyclohexane dimethanol mono(meth)acrylate.

The amount of endcapped polyisocyanate used depends on the hydroxyl functionality of the acrylic resin, so that the desired stoichiometry of acrylic resin hydroxyl groups and endcapped isocyanate reactive groups is preserved at from 0.66:1.0 to 1.5:1.0. The flexible acrylic resin generally has a hydroxyl functionality of from 4.5 to 10, whereas the rigid acrylic resin generally has a hydroxyl functionality of from 3 to 7.5. Lower amounts of one or more highly hydroxyl functional rigid or flexible acrylic resin may be used; and, higher amounts of one or more lower hydroxyl functional rigid or flexible acrylic resin may be used. The total amount of one or more flexible or rigid hydroxyl functional acrylic resin used in a coating composition, based on the total weight of resin solids, may be 5 wt.% or more, or 15 wt.% or more, preferably 20 wt.% or more, or may be 50 wt.% or less, or 40 wt.% or less, preferably 35 wt.% or less.

Acrylic resins may be polymerized in a conventional batch reactor in a solvent bath using radical polymerization catalysts, such as peroxides, perborates, persulfates, perbenzoates, and bis-nitriles. In the alternative, acrylic resins may be synthesized as aqueous dispersions in the presence of the same catalysts and surface active agents, such as polyoxyethylene nonyl phenyl ether, followed by letdown and drying, and then dissolution into a desired solvent medium.

Useful examples of polyisocyanates for use as the endcapped polyisocyanate crosslinker may be chosen from, without limitation, the oligomers, trimers, biurets and isocyanurates of aliphatic isocyanates such as ethylene diisocyanate, 1,2-diisocyanatopropane, 1,3-diisocyanatopropane, 1,4-butylene diisocyanate, lysine diisocyanate, 1, 6-hexamethylene diisocyanate (HDI); alicyclic isocyanates, such as 1,4-methylene bis (cyclohexyl isocyanate), IPDI, methylenebis-4, 4'-isocyanatocyclohexane (HMDI), 1,4-cyclohexane diisocyanate; and aromatic isocyanates, such as tetramethyl xylylene diisocyanate (TMXDI), metaxylylene diisocyanate, p-phenylene diisocyanate, triphenylmethane 4,4',4"- triisocyanate, toluene diisocyanate (TDI), diphenylmethane 4,4'-diisocyanate, the oligomers, trimers, biurets and isocyanurates of mixtures of the above isocyanates, and mixtures thereof, wherein the oligomer contains from 4 to 8 reactive isocyanate groups. The di(alkoxy)alkyl endcapped oligomers, trimers, biurets and isocyanurates of alicyclic isocyanates, e.g. IPDI, aromatic isocyanates, and their mixtures may preferably be used as rigid crosslinkers because these polyisocyanates are highly compatible with the flexible acrylic resins of the present invention. However, in the case of rigid hydroxyl containing acrylic resin, the rigid acrylic resin will be highly compatible with more flexible endcapped aliphatic polyisocyanates. In any coating, such as clearcoats, endcapped aliphatic polyisocyanates or alicyclic polyisocyanates may preferably be used to prevent yellowing.

Examples of the di(alkoxy)alkyl dicarboxylic acid esters which can be prereacted (thermally) with polyisocyanate compounds may be chosen from, for example, the 1 to 12 carbon alkyl and/or alkyoxyalkyl esters and diesters of malonic, succinic, glutaric, adipic acid, pimelic or suberic acid, such as dimethyl malonate, dimethoxymethyl malonate, diethyl malonate (DEM), dimethoxyethyl malonate, diethoxyethyl malonate, dipropyl malonate, diisopropyl malonate, dibutyl malonate, methyl ethyl malonate, methyl propyl malonate, methyl butyl malonate, ethyl propyl malonate, ethyl butyl malonate, dimethyl succinate, diethyl succinate, dipropyl succinate, diisopropyl succinate, dibutyl succinate, methyl ethyl succinate, methyl propyl succinate, methyl butyl succinate, ethyl propyl succinate, ethyl butyl succinate, dimethyl glutarate, diethyl glutarate, dipropyl glutarate, diisopropyl glutarate, dibutyl glutarate, diethyl adipate and mixtures thereof. Di(alkoxy)alkyl malonate and di(alkoxy)alkyl succinate esters are preferred.

The amount of the one or more dialkyl dicarboxylic acid ester endcapped polyisocyanate crosslinker may be 5 wt.% or more, based on total resin solids, or 10 wt.% or more, preferably 15 wt.% or more, and may be 35 wt.% or less, based on total resin solids, or 30 wt.% or less, preferably 23 wt.% or less. The amount of the endcapped polyisocyanate crosslinker used should meet the desired stiochiometric ratio of acrylic hydroxyl groups to endcapped isocyanate ester groups of from 0.66:1.0 to 1.5:1.0.

Di(alkoxy)alkyl dicarboxylic acid ester endcapped polyisocyanates may be synthesized by heating a mixture of the polyisocyanate and the di(alkoxy)alkyl dicarboxylic acid ester, or by mixing them with sodium methoxide as a catalyst and heating.

Additional crosslinkers in coating compositions comprising one or more flexible hydroxyl functional acrylic resin may include (poly)isocyanates which are not blocked or endcapped, as well as aminoplasts. Non-limiting examples of aminoplast resins include monomeric or polymeric melamine formaldehyde resins, including melamine resins that are partially or fully alkylated using alcohols that preferably have one to six, more preferably one to four, carbon atoms, such as hexamethoxy methylated melamine. Monomeric melamine formaldehyde resins are particularly preferred. The preferred alkylated melamine formaldehyde resins are commercially available, for example from UCB Surface Specialties, St. Louis, Mo., under the trademark RESIMENE™ or from Cytec Industries, Stamford, Conn., under the trademark CYMEL™. Such crosslinkers may be used in the amount of 0 wt.% or more, based on total resin solids, and may be as high as 15 wt.%, and preferably in clearcoats is no more than 5 wt.%, based on total resin solids.

Compositions according to the present invention may contain one or more than one additive, such as auxiliary resins, thickeners, wetting agents, fillers, impact modifiers, flow aids or rheology modifiers, ultraviolet (UV) absorbers in the amount of from 0 to 5 wt. %, for example, 1.0 to 4.0 wt.%, based on the total weight of the composition, for example 0.001 to 0.5 wt.%, stabilizers, silicone antifoamants in the amount of from 0.01 to 1.0 wt.%, based on the total weight of the composition, antioxidants, buffers, pigments, colorants, and dyes, all used in conventional amounts.

Suitable auxiliary resins or resin compositions may include nitrocellulose, cellulose acetate butyrate (CAB), alkyds, polyesters, acrylic modified alkyds, polyurethanes, acrylic urethanes, polyester urethanes, polyurethane carbonates, and mixtures and combinations thereof. Amounts of such resins may range up to 15 phr.

Topcoat coating compositions, basecoats and colorcoat coating compositions may further include up to 120 phr, or up to 80 phr, or up to 40 phr of pigments or colorant such as are commonly used in the art, including color pigments, flake pigments, and filler pigments. Illustrative examples of these are azo reds, quinacridone reds and violets, perylene reds, copper phthalocyanine blues and greens, carbazole violet, monoarylide and diarylide yellows, tolyl and naphthol oranges, metal oxides, chromates, molybdates, phosphates, and silicates, silicas, aluminums, micas, and bronzes. While flake pigments are usually stirred in as a slurry, other pigments are generally dispersed with resins or dispersants and solvent to form pigment pastes, using equipment, such as attritors and sand mills, and methods widely-used in the art.

Clearcoats may comprise colorants or pigments to tint them, for example in the amount of from 0.001 to 1.5 wt.%, based on the total weight of the coating composition.

As to the form of the coating, it can be used in any solvent borne coating form, such as organic solvent solutions or suspensions, non-aqueous dispersions, or high-solids coatings.

Solvents useful in the solventborne compositions according to the present invention may include aromatic solvents, such as toluene, xylene, naphtha, and petroleum distillates; aliphatic solvents, such as heptane, octane and hexane; ester solvents, such as butyl acetate, isobutyl acetate, butyl propionate, ethyl acetate, isopropyl acetate, butyl acetate, amyl acetate, ethyl propionate and isobutylene isobutyrate; ketone solvents, such as acetone and methyl ethyl ketone; lower alkanols; glycol ethers, glycol ether esters, lactams, e.g. N-methyl pyrrolidone (NMP); and mixtures thereof.

Each of the various solvents may be used in the amount of 25 to 75 wt. % total solvent, based on the total weight of the coating composition. To enhance sprayability and to lower viscosity, one or more fast evaporating solvents chosen from lower alkyl (C₁ to C₆) ketones, lower alkyl (C₁ to C₄) alkanols, xylene and toluene may be added in amounts of from 0.5 to 10 wt. %, based on the total weight of the coating composition. One or more slow evaporating solvents such as aromatic process oil, petroleum distillates, lactams, e.g. NMP, alkyl and alkylaryl esters, e.g. ethylhexyl acetate, and glycol ethers, such as butyl cellusolve, may be added in the amount of from 0.5 to 5 wt. %, based on the total weight of the coating composition. A blend of slow and fast evaporating solvents may be used to aid in film formation and provide sag resistance.

Coating compositions may be applied via electrostatic spray guns or pneumatic spray guns and may be thermally cured for a period of from 5 to 60 minutes, for example from 10 to 45 minutes, at 75°C or higher, for example, 80°C or higher, or 100°C or higher, and as high as 150°C. Cured coatings, layers or films may range from 0.25 mil (6.35 µm) to about 4 mil (101.6 µm) thick. A multilayer coating having two to four layers may range from 1.0 mil (25.4 µm) to 16 mil (406.4 µm) thick.

The coating compositions of the present invention may be used as the outermost layer or layers of coating on a coated substrate, as a topcoat or clearcoat, or they may be coated on primed substrates as a color coat or base coat. The coatings can be applied over many different substrates, including wood, metals, glass, cloth, plastic, foam, metals, and elastomers. They are particularly preferred as topcoats on automotive articles, such as plastics, bumpers, elastomeric fascia, body trim and body molding.

To test the acid etch resistance of a coating, a layer of clearcoat was applied to a 1.4 to 1.6 mil (35.56 to 40.64 ìm) thick dry film made by electrocoating a 4"x18" (101.6 to 457 mm) steel panel. Several drops of a 1 N solution of sulfuric acid were applied every ½" (12.7mm) lengthwise on the panel. The panel was then baked for thirty minutes on a gradient oven using a linear temperature step program ranging from 130 to 180F (54 to 82°C). Upon removal from the oven, the panels were assessed visually as very good, fair, or unacceptable.

To test the solvent resistance of a coating, a layer of clearcoat was applied to a 1.4 to 1.6 mil (35.56 to 40.64 ìm) thick dry film on a 3"x6" (76.2 to 152.4 mm) thermoplastic urethane plastic panel. Methyl ethyl ketone was applied to a paper towel, and rubbed back and forth across the panel thirty times. The ability to scratch the coating with a human thumbnail was assessed, and the resulting integrity of the film was rated as very good, fair, or unacceptable.

To test the flexibility of a coating, a layer of clearcoat was applied to a 1.4 to 1.6 mil (35.56 to 40.64 mm) thick dry film on a 1"x6" (25.4 to 152.4 mm) thermoplastic urethane plastic panel. The panel was conditioned at 0°F (-18°C) for a minimum of four hours. After conditioning, the panel was bent over a 1 1/8" (28.6 mm) mandrel. The resulting resistance to cracking was visually assessed as very good, fair, or unacceptable.

To test the storage stability of a coating, an initial #4 Ford cup viscosity (in seconds) of the formulation was measured at 25 °C and then two hundred grams of the formulation was placed into a 12 ounce (341 g) glass jar and sealed tightly. The sample was then placed into a 130°F (54°C) oven for seven days. Upon removal from the oven, the sample was allowed to equilibrate to 77°F (25°C), and the #4 Ford cup viscosity was measured. The increase in viscosity after seven days was rated as very good, fair, or unacceptable; where no increase in viscosity or an increase of less than 10 seconds/week is considered to be very good.

### Key to test results:

- ○ =: Very Good
- Δ =: Fair
- X =: Unacceptable

### EXAMPLES

The following examples evaluate the use of several acrylic polymer formulations, as shown in the following Table 1, which are blended with a dialkyl malonate endcapped polyisocyanate to make a one-component coating composition, which is itself applied and crosslinked to make environmental etch-resistant, flexible clearcoats.

**TABLE 1:**

| Flexible Acrylic Resins For Clearcoats | | | | | | | | |
|---|---|---|---|---|---|---|---|---|
| **No.** | **Monomers** | **Monomer wt. %** | **Solvent** | **NVM**^{**2**} | **Hydroxyl Number (mg KOH/g)** | **Mn** | **Functionality** ^{**1**} | **Tg (°C)** |
| 1 | 1,4-Cyclohexane-dimethanol | | Propylene glycol methyl ether acetate | 70% | 61.4 | 2700 | 3 | 31 |
| | monoacrylate | 15.16 | | | | | | |
| | Methacrylic acid | 0.09 | | | | | | |
| | n-Butyl methacrylate | 31.92 | | | | | | |
| | Isobutyl methacrylate | 12.64 | | | | | | |
| | Styrene | 6.19 | | | | | | |
| 2 | Butanediol monoacrylate | 20.16 | Propylene glycol methyl ether acetate | 70% | 112 | 4500 | 9 | -38 |
| | 2-Ethylhexyl acrylate | 42.14 | | | | | | |
| | Styrene | 5.0 | | | | | | |
| 3 | Butanediol monoacrylate | 20.16 | Propylene glycol methyl ether acetate | 70% | 112 | 4300 | 8.6 | -38 |
| | 2-Ethylhexyl acrylate | 42.14 | | | | | | |
| | Styrene | 5.0 | | | | | | |
| 4 | Butanediol monoacrylate | 20.16 | Methyl amyl ketone | 70% | 112 | 3800 | 7.6 | -38 |
| | 2-Ethylhexyl acrylate | 42.14 | | | | | | |
| | Styrene | 5.0 | | | | | | |
| 5 | Butanediol monoacrylate | 20.16 | Methyl amyl ketone | 70% | 112 | 3300 | 6.6 | -38 |
| | 2-ethylhexyl acrylate | 42.14 | | | | | | |
| | Styrene | 5.0 | | | | | | |
| 6 | Hydroxy polyester acrylate³ | 32.11 | Propylene glycol methyl ether acetate | 70% | 93.5 | 4500 | 7.5 | -10 |
| | 2-hydroxyethyl methacrylate | 3.03 | | | | | | |
| | Methacrylic acid | 0.09 | | | | | | |
| | n-Butyl methacrylate | 14.18 | | | | | | |
| | 2-Ethylhexyl methacrylate | 12.27 | | | | | | |
| | Styrene | 5.10 | | | | | | |
| 7 | n-Butyl methacrylate | 24.76 | Propylene glycol methyl ether acetate | 70% | 61.4 | 3400 | 3.7 | 2 |
| | Isobutyl methacrylate | 9.80 | | | | | | |
| | Styrene | 5.0 | | | | | | |
| | Hydroxy polyester acrylate³ | 26.35 | | | | | | |
| | Methacrylic acid | 0.09 | | | | | | |
| 8 | Butanediol monoacrylate | | Primary amyl acetate/ aromatic petroleum distillates | 70% | 112 | 2800 | 5.6 | -38 |
| | 2-Ethylhexyl acrylate | 20.16 | | | | | | |
| | Styrene | 42.14 | | | | | | |
| | | 5.0 | | | | | | |
| 9 | 1,4-Cyclohexane-dimethanol | | Propylene glycol methyl ether acetate | 70% | 61.4 | 2700 | 3 | 31 |
| | monoacrylate | 15.16 | | | | | | |
| | Methacrylic acid | 0.09 | | | | | | |
| | n-Butyl methacrylate | 31.92 | | | | | | |
| | Isobutyl methacrylate | 12.64 | | | | | | |
| | Styrene | 6.19 | | | | | | |

| | | | | | | | | |
|---|---|---|---|---|---|---|---|---|
| Notes: ¹ Functionality is calculated by dividing Mn (molecular weight) by equivalent weight. Equivalent weight equals 56,100 (mg KOH/g resin) divided by the hydroxyl number. | | | | | | | | |
| ² NVM: non-volatile materials %, by mass. | | | | | | | | |
| ³ Hydroxy polyester acrylate consists of; 2 moles of epsilon caprolactone reacted with 1 mole of 2-hydroxyethyl acrylate. | | | | | | | | |

To prepare the resin, a glass reactor fitted with a thermocouple, temperature controller, mixer, nitrogen sparge, and two dropping funnels was charged with 24 parts solvent and raised to a temperature of 290°F (143°C). A 66 weight part mixture of monomers was fed into the reactor through one funnel simultaneously with 4 weight parts polymerization initiator and 6 weight parts of the solvent mix in the other funnel over a period of six hours. The mixture was maintained at 290°F (143°C) for an additional one hour period to complete the reaction.

To prepare the clearcoat formulas, the rheology additive and all non-alcohol solvents were added to a container, and mixed for a minimum of five minutes of moderate agitation using an air-powered mixer. The alcohol and catalyst were added with continued moderate agitation. The sample was then allowed to agitate for a minimum of ten minutes, after which time the acrylic resin was added to the agitating sample. The durability and flow additives were then added with continued agitation, followed by addition of the crosslinker under agitation. The formulation was allowed to mix for a minimum of twenty minutes before removal from the mixing device.

The following crosslinkers dispersed in an n-butyl acetate solvent carrier were used:

| **INGREDIENT** | | **NVM** | **Eq. Wt.** |
|---|---|---|---|
| A | DEM-endcapped isocyanurate of IPDI | 65% | 380 |
| B | DEM-endcapped isocyanurate of HDI | 70% | 335 |

Table 2, below, gives the formulation of each Example:

**TABLE 2:**

| One Component Clearcoat Formulations | | | | | | | |
|---|---|---|---|---|---|---|---|
| **EXAMPLE** | **Acrylic Resin**^{**1**} | **Crosslinker**^{**1**} | **Rheology**^{**2**} | **Durability**^{**3**} | **Flow**^{**4**} | **Catalyst**^{**5**} | **Solvent**^{**6**} |
| 1 | 67.3 (47.1) | A 30.2 (19.6) | 6.3 | 2.4 | 0.6 | 2.1 | 21.5 |
| 2 | 36.9 (25.8) | A 30.2 (19.6) | 6.3 | 2.4 | 0.6 | 2.1 | 21.5 |
| 3 | 36.9 (25.8) | A 30.2 (19.6) | 6.3 | 2.4 | 0.6 | 2.1 | 21.5 |
| 4 | 36.9 (25.8) | A 30.2 (19.6) | 6.3 | 2.4 | 0.6 | 2.1 | 21.5 |
| 5 | 36.9 (25.8) | A 30.2 (19.6) | 6.3 | 2.4 | 0.6 | 2.1 | 21.5 |
| 6 | 44.2 (30.9) | A 30.2 (19.6) | 6.3 | 2.4 | 0.6 | 2.1 | 21.5 |
| 7 | 67.3 (47.1) | A 30.2 (19.6) | 6.3 | 2.4 | 0.6 | 2.1 | 21.5 |
| 8 | 36.9 (25.8) | A 30.2 (19.6) | 6.3 | 2.4 | 0.6 | 2.1 | 21.5 |
| 9 | 67.3 (47.1) | B 24.7 (17.3) | 6.3 | 2.4 | 0.6 | 2.1 | 21.5 |

| | | | | | | | |
|---|---|---|---|---|---|---|---|
| Notes: ¹ Acrylic Resin and Crosslinker values are given as supplied, as well as the NVM (solids) value, which is in parentheses. | | | | | | | |
| ² The rheology additive is a 30% NVM acrylic copolymer solution in 4/1 w/w xylene/n-butanol. | | | | | | | |
| ³ The durability additives are composed of an aminoether hindered amine light stabilizer, a benzotriazole ultraviolet light absorber, and a triazine ultraviolet light absorber. | | | | | | | |
| ⁴ The flow additive is a silicone-based leveling additive. | | | | | | | |
| ⁵ The catalyst is a blocked acid catalyst. | | | | | | | |
| ⁶ Solvent consists of 6.7 parts aromatic solvents, 7 parts n-butanol, and 7.8 parts of a blend of 2-ethylhexyl acetate and isobutyl isobutyrate. | | | | | | | |

Each formulation was tested for solvent resistance, acid etch resistance, flexibility and storage stability. The test results for the test formulations are summarized in the following Table 3.

**TABLE 3:**

| Results | | | | |
|---|---|---|---|---|
| **Example** | **Acid Etch Resistance** | **Solvent Resistance** | **Flexibility** | **Storage Stability** |
| 1 | o | Δ | X | o |
| 2 | o | o | Δ | X |
| 3 | o | o | Δ | X |
| 4 | o | o | o | Δ |
| 5 | o | o | o | o |
| 6 | o | Δ | o | Δ |
| 7 | Δ | X | o | o |
| 8 | o | o | o | o |
| 9 | o | o | o | o |

As the above example 1 shows, if the flexible acrylic resin has too high a Tg or is too rigid, the resulting coating lacks flexibility where the crosslinker is DEM blocked isocyanurate of IPDI. Example 7 also shows that selection of a flexible acrylic resin having a low functionality of 3.7 can lead to acid etch resistance and solvent resistance problems. Examples 5, 6 and 8 show that formulations having flexible acrylic resins with hydroxyl functionalities of 6.6, 7.5 and 7.6 will give acid etch-resistant, flexible clearcoats. However, examples 2 to 4 and 6 show that failing to limit the functionality of the flexible acrylic resin can lead to storage stability problems. In addition, in examples 2 and 3 where acrylic functionality is 9.0 and 8.6, the resulting coating lacks flexibility. In example 9, a one-component rigid acrylic, flexible HDI crosslinker formulation gives coatings having a desirable flexibility, acid etch resistance and storage stability.

## Claims

1. A coating composition comprising one or more hydroxyl functional acrylic resin chosen from flexible acrylic resin having a glass transition temperature (Tg) of from -100°C to -10°C and rigid acrylic resin having a glass transition temperature (Tg) of from 20°C to 70°C, and
one or more di(alkoxy)alkyl dicarboxylic acid ester endcapped polyisocyanate crosslinker,
wherein when the said one or more hydroxyl functional acrylic resin is rigid acrylic resin, the said one or more di(alkoxy)alkyl dicarboxylic acid ester endcapped polyisocyanate crosslinker comprises aliphatic polyisocyanate.

2. A coating composition as claimed in claim 1, comprising:
from 5 to 50 wt.%, based on total resin solids, of the said one or more hydroxyl functional acrylic resin having a glass transition temperature (Tg) of from -100°C to -10°C,
from 5 to 35 wt.%, based on total resin solids, of the said one or more one or more dialkyl dicarboxylic acid ester endcapped polyisocyanate crosslinker resin, and
from 0 to 15 wt.%, based on total resin solids of aminoplast resin.

3. A coating composition as claimed in claim 2, wherein the said one or more dialkyl dicarboxylic acid ester endcapped polyisocyanate crosslinker comprises one or more dialkyl dicarboxylic acid ester endcapped oligomer, trimer, biuret or isocyanurate of an alicyclic or aromatic isocyanate.

4. A coating composition as claimed in claim 1, wherein the said hydroxyl functional acrylic resin comprises the copolymerization product of hydroxyl group containing monomers chosen from one or more of 4-hydroxybutyl (meth)acrylate, propylene glycol (meth)acrylate, pentanediol (meth)acrylate, hexylene glycol (meth)acrylate, diethylene glycol (meth)acrylate, triethylene glycol (meth)acrylate, dipropylene glycol (meth)acrylate, N-propanol (meth)acrylamide, N-butanol (meth)acrylamide, and polyether (meth)acrylate.

5. A coating composition as claimed in claim 1, wherein each of the said one or more endcapped polyisocyanate contains from 3 to 8 reactive endcapped isocyanate groups.

6. A coating composition as claimed in claim 1, wherein the said hydroxyl functional acrylic resin comprises the copolymerization product of flexibility conferring monomers chosen from one or more of ethyl (meth)acrylate, methyl acrylate, butyl (meth)acrylate, 2-ethylhexyl acrylate, lauryl (meth)acrylate, polyurethane di(meth)acrylates, polyether di(meth)acrylates, polyester di(meth)acrylates, di(meth)acrylates of oligocaprolactone, and combinations thereof.

7. A coating composition as claimed in claim 1, wherein the said Tg of the said hydroxyl functional acrylic resin is -20°C or less.

8. A coating composition as claimed in any one of claims 1 to 7, wherein the said one or more di(alkoxy)alkyl dicarboxylic acid ester endcapped polyisocyanate crosslinker consists essentially of one or more dialkyl dicarboxylic acid ester endcapped polyisocyanate crosslinker.

9. An environmental etch -resistant, flexible, one-component clearcoat produced from a coating composition as claimed in any one of claims 1 to 7.

10. A substrate coated with the coating composition of any one of claims 1 to 7.
